# EUROPÄISCHE PATENTSCHRIFT

(11) **EP 1 454 197 B1**
(45) Veröffentlichungstag und Bekanntmachung des Hinweises auf die Patenterteilung: **15.11.2006**
(21) Anmeldenummer: 02777169.0
(22) Anmeldetag: 20.09.2002
(51) Int. Cl.: G03H 1/02, G09F 3/02, C09J 7/02, B32B 27/20, B65D 55/02

(54) **SICHERHEITSKLEBEBAND**
SECURITY ADHESIVE STRIP
BANDE ADHESIVE DE SECURITE

(30) Priorität: 19.11.2001 DE 10156793
(43) Veröffentlichungstag der Anmeldung: 08.09.2004
(73) Patentinhaber: tesa scribos GmbH, 69126 Heidelberg (DE)
(72) Erfinder: GERSPACH, Matthias, 69221 Dossenheim (DE); DIETRICH, Christoph, 69126 Heidelberg (DE); BLAZEJEWSKI, Annouschka, 22527 Hamburg (DE); NOEHTE, Steffen, 69469 Weinheim (DE); STADLER, Stefan, 22359 Hamburg (DE)
(74) Vertreter: Both, Georg
(86) Internationale Anmeldenummer: PCT/EP2002/010617
(87) Internationale Veröffentlichungsnummer: WO 2003/044605

(56) Entgegenhaltungen:
- EP-A- 0 660 262
- WO-A-01/84544
- WO-A-02/46845
- GB-A- 2 211 760
- US-A- 5 510 171
- US-B1- 6 266 166

## Beschreibung

Die Erfindung betrifft ein Sicherheitsklebeband sowie ein Verfahren zum Eingeben von holographischer Information in ein derartiges Sicherheitsklebeband.

Um ein unerlaubtes Öffnen von Verpackungen und Kartons sichtbar zu machen, sind seit einiger Zeit sogenannte "tamper evident"-Tapes (Sicherheitsklebebänder) im Einsatz. Diese Sicherheitsklebebänder haben nach dem Verschließen einer Verpackung ein unauffälliges Erscheinungsbild. Beim Abziehen des Sicherheitsklebebands von der Verpackung wird jedoch ein Schriftzug (z.B. "opened" oder "alert") sichtbar, der auch nach dem Wiederverschließen deutlich sichtbar bleibt. Dadurch ist offenkundig, dass die Verpackung oder der Karton geöffnet wurde.

Ein Nachteil dieser vorbekannten Sicherheitsklebebänder ist, dass das Material frei zur Verfügung steht. Daher könnte eine Verpackung geöffnet und später mit frischem Sicherheitsklebeband wieder verschlossen werden; gegebenenfalls müsste die Verpackung selbst ausgetauscht werden. Jedenfalls würde das unerlaubte Öffnen nicht sichtbar.

Es ist Aufgabe der Erfindung, ein Sicherheitsklebeband mit erhöhter Sicherheit gegen Fälschungen zu schaffen.

Diese Aufgabe wird gelöst durch ein Sicherheitsklebeband mit den Merkmalen des Anspruchs 1. Der Anspruch 14 gibt ein Verfahren zum Eingeben von holographischer Information in ein derartiges Sicherheitsklebeband an. Vorteilhafte Ausgestaltungen der Erfindung ergeben sich aus den Unteransprüchen.

Das erfindungsgemäße Sicherheitsklebeband weist eine Polymerfolie auf, deren Brechzahl und/oder Grenzflächenstruktur lokal durch Erwärmung veränderbar ist; vorzugsweise dient die Polymerfolie als Decklage und als Tragstruktur des Sicherheitsklebebandes. Unterhalb der Polymerfolie ist eine Absorberschicht mit einem Absorberfarbstoff angeordnet, die dazu eingerichtet ist, einen auf die Absorberschicht gerichteten Schreibstrahl zumindest teilweise zu absorbieren, die dabei erzeugte Wärme zumindest teilweise lokal an die Polymerfolie anzugeben und sich dabei selbst lokal zu verändern. Unterhalb der Absorberschicht ist eine Klebstoffschicht angeordnet. Die Haftung zwischen der Klebstoffschicht und der Absorberschicht ist größer als die Haftung zu der Polymerfolie.

Mit Hilfe eines Schreibstrahls lassen sich die Polymerfolie und die Absorberschicht lokal verändern, was zum Eingeben von Information, insbesondere in Form von Hologrammen, ausgenutzt werden kann. Das erfindungsgemäße Sicherheitsklebeband ist daher individualisierbar, wobei es mit benutzerspezifischer Information über einen gesicherten Vertriebsweg ausgeliefert oder aber vom Benutzer selbst beschrieben wird. Fälschungen oder Nachahmungen werden dadurch erheblich erschwert. So kann z.B. eine geöffnete Verpackung nicht ohne weiteres mit einem neuen Sicherheitsklebeband geschlossen werden, da es sehr schwierig ist, ein mit benutzerspezifischer Information versehenes Sicherheitsklebeband nachzuahmen.

Der "tamper evident"-Effekt wird dadurch erreicht, dass bei dem Versuch, das Sicherheitsklebeband von einer Verpackung abzuziehen, eine Delaminierung zwischen der Absorberschicht und der Polymerfolie eintritt. Die Haftung zwischen der Klebstoffschicht und der Absorberschicht ist nämlich größer als die Haftung zu der Polymerfolie, was durch geeignete Wahl der Verankerungsparameter zwischen den Schichten (wobei auch noch Zwischenschichten vorgesehen sein können, z.B. eine Reflexionsschicht, siehe unten) einstellbar ist. Beim Delaminieren verbleibt also die Absorberschicht auf der Verpackung. Da beim Einschreiben von Information sowohl die Absorberschicht als auch die Polymerfolie lokal verändert werden, tragen beide Schichten Information, z.B. in Form eines Hologramms (siehe unten). Bei dem Versuch, die Verpackung wieder zu verschließen, muss die abgelöste Polymerfolie wieder mit der Absorberschicht verbunden werden. Es ist jedoch praktisch nicht möglich, dabei einen Bereich mit eingegebener Information (also insbesondere ein Hologramm) in der Polymerfolie "passgenau" mit dem zugehörigen Bereich bzw. Hologramm der Absorberschicht zur Deckung zu bringen. Bei Bestrahlung mit Licht, insbesondere kohärentem Licht von einem Laser, fallen die Abweichungen auf. Das erfindungsgemäße Sicherheitsklebeband ist also nicht nur fälschungssicher, sondern zeigt auch zuverlässig an, ob versucht wurde, die mit dem Sicherheitsklebeband verschlossene Verpackung zu öffnen.

Bei einer bevorzugten Ausgestaltung der Erfindung ist die Grenzflächenstruktur der Polymerfolie lokal durch Erwärmung veränderbar, wobei holographische Information über die lokale Grenzflächenstruktur der Polymerfolie einschreibbar ist. Dabei ist die Absorberschicht dazu eingerichtet, bei Absorption eines Schreibstrahls eine der lokalen Grenzflächenstruktur der Polymerfolie entsprechende Grenzflächenstruktur anzunehmen.

Um bei dieser Ausgestaltung holographische Information in das Sicherheitsklebeband einzubringen, kann ein als Schreibstrahl dienender Laserstrahl auf die Absorberschicht gerichtet (vorzugsweise fokussiert) werden, so dass die Lichtenergie dort lokal absorbiert und in Wärmeenergie umgewandelt wird. Diese Wärmeenergie wird an die Polymerfolie abgegeben. Dadurch ändert sich die Grenzflächenstruktur oder Topographie der Polymerfolie, insbesondere an der zu der Absorberschicht weisenden Grenzfläche. Insbesondere, wenn der Laserstrahl kurzzeitig (gepulst) eingestrahlt wird, bleibt die zu der lokalen Änderung der Grenzflächenstruktur führende Materialveränderung in der Polymerfolie aufgrund der allgemein schlechten Wärmeleitfähigkeit des Polymers auf ein sehr enges Volumen begrenzt. Die lokale Grenzflächenstruktur der Polymerfolie wird auch der unmittelbar angrenzenden oder über eine dünne Zwischenschicht (siehe unten) mit der Polymerfolie mechanisch in Verbindung stehenden Absorberschicht aufgeprägt, so dass die Absorberschicht eine der lokalen Grenzflächenstruktur der Polymerfolie entsprechende Grenzflächenstruktur annimmt.

Wenn bei dieser Ausgestaltung des Sicherheitsklebebandes die holographische Information Punkt für Punkt eingegeben wird, wobei der einem Punkt zugeordnete Bereich typischerweise lineare seitliche Abmessungen in der Größenordnung von 0,5 µm bis 1 µm hat, ändert sich das Höhenprofil der Polymerfolie typischerweise um 50 nm bis 500 nm, was im Einzelnen von den Eigenschaften und Betriebsbedingungen des Schreibstrahls sowie den Eigenschaften der Polymerfolie und der Absorberschicht abhängt. Das Punktraster, d.h. der Mittenabstand zwischen zwei Punkten ("Pits"), liegt typischerweise im Bereich von 1 µm bis 2 µm. Generell gilt, dass kürzere Lichtwellenlängen des Schreibstrahls ein engeres Punktraster zulassen.

In diesem Fall wird ein Hologramm durch die Oberflächen- bzw. Grenzflächenstruktur der Polymerfolie gebildet. Es handelt sich also um eine Reliefhologramm, das vorzugsweise in Reflexion ausgelesen wird. Eine Relieftiefe von etwa 150 nm ist für die Wiedergabe des Hologramms in Reflexion unter Verwendung von Licht einer Wellenlänge von etwa 600 nm ideal, da das Maximum für die Beugungseffizienz bei einem Viertel der Lichtwellenlänge liegt.

Die Grenzflächenstruktur der Absorberschicht bildet ein Gegenstück zu dem Relief der Polymerfolie. Dieses Gegenstück enthält die vollständige holographische Information, die auch in dem Hologramm der Polymerfolie enthalten ist. Denn Hologramme liefern bei der Rekonstruktion generell dasselbe Bild, wenn in der Hologrammstruktur die lokalen Werte mit ihren Gegenwerten vertauscht werden (also Berg und Tal bei Reliefhologrammen, Bereiche hoher Brechzahl mit Bereichen niedriger Brechzahl bei Phasenhologrammen und Bereiche hoher Absorption mit Bereichen niedriger Absorption bei Amplitudenhologrammen). Falls die Änderungen des Höhenprofils bei dem Reliefhologramm der Absorberschicht den bevorzugten Wert von etwa 150 nm haben, befindet sich dieses Relief bei einer Dicke der Absorberschicht von mehr als etwa 200 nm ausschließlich in der Absorberschicht und nicht in der darunter angeordneten Klebstoffschicht.

Wenn bei der erläuterten Ausführungsform des Sicherheitsklebebands nicht versucht wurde, das Sicherheitsklebeband abzulösen, liegen die Grenzflächenstrukturen der Polymerfolie und der Absorberschicht passgenau ineinander und bilden ein einheitliches Hologramm, das sich durch Reflexion an der Grenzflächenstruktur der Polymerfolie problemlos auslesen lässt. Bei dem Versuch, das Sicherheitsklebeband abzuziehen, trennen sich die Polymerfolie und die Absorberschicht, so dass darin voneinander unabhängige Hologramme entstehen, die sich nicht wieder passgenau zu einem einheitlichen Hologramm zusammensetzen lassen.

Bei einer anderen bevorzugten Ausgestaltung des Sicherheitsklebebandes ist die Brechzahl der Polymerfolie lokal durch Erwärmung veränderbar, wobei holographische Phaseninformation über die lokale optische Weglänge in der Polymerfolie einschreibbar ist. Dabei ist es vorgesehen, die Polymerfolie beim Auslesen von Information in Transmission zu durchstrahlen (wobei eine Reflexionsschicht an der der Absorberschicht zugewandten Grenzfläche der Polymerfolie von Hilfe sein kann, siehe unten). In der Polymerfolie lässt sich also lokal, d.h. in einem zum Speichern einer Informationseinheit vorgesehenen Bereich, Phaseninformation ablegen, indem in diesem Bereich die Brechzahl durch Erwärmung verändert wird. Die lokale Änderung der Brechzahl bewirkt eine Änderung der optischen Weglänge der beim Auslesen von Information aus der Polymerfolie verwendeten Strahlung (die die Polymerfolie in Transmission durchstrahlt). Die optische Weglänge ist nämlich das Produkt aus der geometrischen Weglänge und der Brechzahl. Über eine Änderung der Brechzahl lässt sich also die lokale Phasenlage der beim Auslesen von Information eingesetzten Strahlung beeinflussen, d.h. die gewünschte holographische Information als Phaseninformation abspeichern. Ein auf diese Weise in der Polymerfolie erzeugtes Hologramm ist demnach ein refraktives Phasenhologramm.

Der Absorberfarbstoff kann dazu eingerichtet sein, bei Absorption eines Schreibstrahls in seinen optischen Eigenschaften lokal verändert zu werden. Dabei ist es besonders vorteilhaft, wenn der Absorberfarbstoff lokal sein Absorptionsvermögen ändert, z.B. indem er von dem Schreibstrahl teilweise oder vollständig ausgebleicht wird. In eine Absorberschicht mit einem derartigen Absorberfarbstoff kann mit dem Schreibstrahl, der gleichzeitig die lokale Erwärmung der Polymerfolie bewirkt, ein Absorptionshologramm (Amplitudenhologramm) eingegeben werden, das in seinem Informationsgehalt dem in der Polymerfolie erzeugten Hologramm entspricht. Das Absorptionshologramm wird in Transmission ausgelesen, wozu das zum Lesen verwendete Licht vorzugsweise an der Grenzfläche zwischen der Absorberschicht und der Klebstoffschicht reflektiert wird, um so die Absorberschicht zweimal zu durchdringen. Wenn die Polymerfolie lokal bei Erwärmung nur ihre Brechzahl, nicht dagegen die Grenzflächenstruktur ändert, ist eine Absorberschicht, in der ein Absorptionshologramm ausgebildet wird, besonders geeignet, um den "tamper evident"-Effekt zu realisieren.

Ein besonders starker Kontrast kann durch Mischformen der beschriebenen Hologrammtypen erzielt werden. Dabei werden in der Polymerfolie mit Hilfe des Schreibstrahls eine reliefartige Grenzflächenstruktur und Variationen der Brechzahl bewirkt. Gleichzeitig lässt sich die Absorberschicht mit einer entsprechenden Grenzflächenstruktur und gegebenenfalls einem Absorptionshologramm versehen.

Vorzugsweise ist zwischen der Polymerfolie und der Absorberschicht eine teildurchlässige Reflexionsschicht angeordnet, wobei vorzugsweise die Haftung zwischen der Polymerfolie und der Reflexionsschicht größer ist als die Haftung zwischen der Reflexionsschicht und der Absorberschicht. Die Reflexionsschicht kann Aluminium aufweisen und hat vorzugsweise eine Dicke im Bereich von 1 nm bis 50 nm, wobei auch andere Dicken möglich sind. Sie ist teildurchlässig, damit der Schreibstrahl beim Eingeben von Information bis zu der Absorberschicht durchdringt. Da die Reflexionsschicht dünn ist, behindert sie die Wärmeabgabe an die Polymerfolie praktisch nicht. Ferner kann sie problemlos die reliefartige Grenzflächenstruktur der Polymerfolie annehmen und auf die Absorberschicht übertragen. Bei dem Versuch, das Sicherheitsklebeband abzulösen, haftet die Reflexionsschicht an der Polymerfolie und nicht an der Absorberschicht. Die Reflexionsschicht erleichtert es, eingegebene holographische Information in Reflexion auszulesen, was in den meisten Anwendungsfällen eine günstige Geometrie darstellt. Ferner vereinfacht die Reflexionsschicht die Fokuseinstellung des Schreibstrahls (siehe unten).

Im Prinzip ist es auch möglich, zwischen der Absorberschicht und der Klebstoffschicht eine Reflexionsschicht vorzusehen. Dadurch wird das Auslesen eines in die Absorberschicht eingebrachten Absorptionshologramms erleichtert. Bevorzugt wird jedoch eine Ausgestaltung des Sicherheitsklebebands, bei der die Absorberschicht unmittelbar auf der Klebstoffschicht angeordnet ist.

Geeignete Materialien für die Polymerfolie sind z.B. Polypropylen, Polyvinylchlorid, Polyester, Polyethylenterephthalat (PET), Polyethylennaphthalat, Polymethylpenten (PMP; auch Poly-2-methylpenten) sowie Polyimid. Die Polymerfolie hat vorzugsweise eine derartige Stärke, dass sie selbsttragend ist und als Tragstruktur des Sicherheitsklebebandes dient und ferner eine Schutzfunktion für eingegebene holographische Strukturen (die sich in der Nähe der Absorberschicht befinden) ausüben kann. Geeignete Stärken oder Dicken liegen im Bereich zwischen 10 µm und 100 µm, aber andere Dicken sind ebenfalls möglich. Es ist denkbar, das Sicherheitsklebeband als eine Art Siegel einzusetzen, wofür eine geringe Materialstärke ausreicht, aber auch als Klebeband zum sicheren Verschließen von Verpackungen oder Kartons, wofür größere Materialstärken besser geeignet sind.

Die Polymerfolie kann verstreckt sein und ist vorzugsweise biaxial verstreckt, z.B. indem sie bei der Herstellung innerhalb ihrer Ebene in zwei senkrecht aufeinanderstehenden Richtungen vorgespannt wird. Dies erhöht in der Regel die Festigkeit der Polymerfolie. Ferner ist bei einer verstreckten Polymerfolie im Folienmaterial ein hohe Energiedichte gespeichert. Durch lokale Erwärmung unter Deposition einer verhältnismäßig geringen Energiemenge pro Flächeneinheit, z.B. mit Hilfe eines Schreibstrahls einer Schreibeinrichtung, der in der Absorberschicht absorbiert wird, kann eine relativ starke Materialänderung mit einer Veränderung der lokalen Eigenschaften (wie Grenzflächenstruktur oder Brechzahl) der Polymerfolie erzielt werden.

Die Absorberschicht weist vorzugsweise außer dem Absorberfarbstoff ein Bindemittel auf. Der Absorberfarbstoff ermöglicht, wie erläutert, eine zur Änderung der lokalen Eigenschaften der Polymerfolie ausreichende lokale Erwärmung der Polymerfolie bei relativ geringer Intensität des Schreibstrahls. Die Absorberschicht kann dünn sein und hat vorzugsweise eine Dicke im Bereich von 0,1 µm bis 10 µm; andere Dicken sind ebenfalls möglich. Bevorzugte Bindemittel, die als Matrix für die Moleküle des Absorberfarbstoffs dienen, sind z.B. optisch transparente Polymere, z.B. aus Polymethylmethacrylat (PMMA) oder, bei Anwendungen für höhere Temperaturen, aus Polymethylpenten, Polyetheretherketon (PEEK) oder Polyetherimid.

Das Absorptionsmaximum des Absorberfarbstoffs sollte mit der Lichtwellenlänge des verwendeten Schreibstrahls zusammenfallen, um eine effiziente Absorption zu erzielen. Für eine Lichtwellenlänge von 532 nm eines von einem Laser erzeugten Schreibstrahls sind z.B. Farbstoffe aus der Sudanrot-Familie (Diazofarbstoffe) oder (für besonders polare Kunststoffe) Eosinscharlach geeignet. Für die gebräuchlichen Laserdioden mit einer Lichtwellenlänge von 650 bis 660 nm oder 685 nm sind grüne Farbstoffe, z.B. aus der Styryl-Familie (die als Laserfarbstoffe gebräuchlich sind), besser geeignet.

Die Klebstoffschicht kann z.B. eine Klebemasse aus einer wässrigen Acrylat-Emulsion enthalten oder aus funktionalisiertem Poly(meth)acrylat bestehen. Für die Klebstoffschicht können auch andere Materialien verwendet werden. Eine bevorzugte Dicke der Klebstoffschicht beträgt etwa 20 µm, aber auch andere Dicken sind möglich. Wenn das Sicherheitsklebeband nicht als Rolle geliefert wird, empfiehlt es sich, die Klebstoffschicht im Lieferzustand abzudecken, z.B. mit einem Silikonpapier.

Holographische Information kann in das Sicherheitsklebeband eingegeben werden, indem in einem Hologramm eines Speicherobjekts enthaltene holographische Information als zweidimensionale Anordnung berechnet wird und ein Schreibstrahl einer Schreibeinrichtung, vorzugsweise eines Laserlithographen, auf die Absorberschicht gerichtet und entsprechend der zweidimensionalen Anordnung so angesteuert wird, dass die lokale Brechzahl und/oder Grenzflächenstruktur der Polymerfolie gemäß der holographischen Information eingestellt wird und die Absorberschicht gemäß der holographischen Information lokal verändert wird. Da die physikalischen Vorgänge bei der Streuung von Licht an einem Speicherobjekt bekannt sind, kann z.B. ein herkömmlicher Aufbau zum Erzeugen eines Hologramms (bei dem kohärentes Licht von einem Laser, das von einem Objekt (Speicherobjekt) gestreut wird, mit einem kohärenten Referenzstrahl zur Interferenz gebracht wird und das dabei entstehende Interferenzmuster als Hologramm aufgenommen wird) mit Hilfe eines Computerprogramms simuliert und das Interferenzmuster bzw. die Modulation der lokalen Eigenschaften (Brechzahl und/oder Grenzflächenstruktur) der Polymerfolie als zweidimensionale Anordnung (zweidimensionaler Array) berechnet werden.

Die Auflösung eines geeigneten Laserlithographen beträgt typischerweise etwa 50 000 dpi (dots per inch). Damit kann die Polymerfolie lokal in Bereichen oder Pits einer Größe von etwa 0,5 µm bis 1 µm verändert werden. Die Schreibgeschwindigkeit und andere Details hängen unter anderem von den Parametern des Schreiblasers (Laserleistung, Lichtwellenlänge) und der Pulsdauer sowie von den Eigenschaften der Polymerfolie und der Absorberschicht ab.

Vorzugsweise wird der Schreibstrahl von der Seite der Polymerfolie her auf das Sicherheitsklebeband gerichtet. In diesem Fall ist es möglich, Information, vorzugsweise in Form von Hologrammen, einzugeben, wenn die Klebstoffschicht keine guten optischen Eigenschaften hat oder das Sicherheitsklebeband bereits auf eine nichttransparente Unterlage (z.B. eine Verpackung oder einen Karton) geklebt ist.

Wenn das Sicherheitsklebeband eine teildurchlässige Reflexionsschicht hat, wie weiter oben erläutert, kann zum Fokussieren des Schreibstrahls dessen von der Reflexionsschicht zurückgeworfener Reflex ausgewertet werden. Ein vergleichbarer Reflex würde bei der Reflexion an der Grenzfläche zwischen zwei Medien mit verschiedener Brechzahl auftreten, wenn dort keine Reflexionsschicht angeordnet ist, wird im vorliegenden Fall aber durch die Reflexionsschicht deutlich verstärkt. Die Auswertung kann beispielsweise über die mit Hilfe eines Detektors gemessene Größe des Reflexes erfordern, wobei die genaue Fokuseinstellung z.B. mit Hilfe von Kalibrationsmessungen ermittelt werden kann. Wenn die Reflexionsschicht sehr dünn ist (etwa 1 nm bis 50 nm, aber auch mehr oder weniger), kann man davon ausgehen, dass der auf die Reflexionsschicht eingestellte Fokus des Schreibstrahls praktisch mit dem optimalen Fokus in der Absorberschicht übereinstimmt. Daher kann beim Eingeben von Information die Absorberschicht praktisch in optimaler Weise erwärmt werden.

Wie erwähnt, wird die holographische Information vorzugsweise in Form von Pits vorgegebener Größe eingegeben. Der Begriff "Pit" ist hier allgemeiner im Sinne eines veränderten Bereichs zu verstehen und nicht eingeschränkt auf seine ursprüngliche Bedeutung (Loch oder Vertiefung). Dabei kann in einem Pit die holographische Information in binär kodierter Form gespeichert werden. Das heißt, im Bereich eines gegebenen Pits nehmen die lokalen Eigenschaften der Polymerfolie (bzw. der Absorberschicht) nur eine von zwei möglichen Grundformen (Grundwerten) an. Diese Grundformen unterscheiden sich vorzugsweise deutlich, damit in der Praxis vorkommende Zwischenformen, die nahe bei der einen oder der anderen Grundform liegen, eindeutig der einen oder der anderen Grundform zugeordnet werden können, um die Information zuverlässig und eindeutig zu speichern.

Alternativ kann in einem Pit die holographische Information in kontinuierlich kodierter Form gespeichert werden, wobei die lokalen Eigenschaften der Polymerfolie (bzw. der Absorberschicht) in dem Pit gemäß einem Wert aus einem vorgegebenen Wertebereich eingestellt werden. Wenn z.B. die lokale Grenzflächenstruktur der Polymerfolie eingestellt werden soll, wird also die lokale maximale Höhenänderung der Grenzflächenstruktur in dem Pit aus einem vorgegebenen Wertebereich ausgewählt. Dies bedeutet, dass in einem gegebenen Pit die Grenzflächenstruktur der Polymerfolie Zwischenformen zwischen zwei Grundformen annehmen kann, so dass die maximale Höhenänderung der vorliegenden Zwischenform einen Wert aus einem vorgegebenen Wertebereich annimmt, dessen Grenzen durch die maximalen Höhenänderungen der beiden Grundformen gegeben sind. In diesem Fall lässt sich die Information also "in Graustufen" abspeichern, so dass jedem Pit der Informationsgehalt von mehr als einem Bit zukommt. Entsprechendes gilt für die Einstellung der lokalen Brechzahl der Polymerfolie.

Zum Auslesen von holographischer Information aus dem erfindungsgemäßen Sicherheitsklebeband kann Licht, vorzugsweise kohärentes Licht (z.B. von einem Laser), großflächig auf die Polymerfolie des Sicherheitsklebebands gerichtet werden. Dabei wird das Licht von den lokal variierenden Eigenschaften der Polymerfolie (Brechzahl und/oder Grenzflächenstruktur) moduliert. Als Rekonstruktion der in dem bestrahlten Bereich enthaltenen Information wird ein holographisches Bild in einem Abstand zu dem Datenspeicher erfasst, z.B. mit einem CCD-Sensor, der mit einer Datenverarbeitungseinrichtung verbunden ist.

Vorzugsweise wird die holographische Information in Reflexion ausgelesen, wobei das zum Auslesen verwendete Licht nach Durchdringen der Polymerfolie reflektiert wird. In diesem Fall entsteht das holographische Bild aus Licht, das zweimal durch die Polymerfolie hindurchgetreten ist und dabei z.B. durch lokale Variationen der Brechzahl und/oder der Grenzflächenstruktur der Polymerfolie moduliert wurde. Grundsätzlich kann auch dann in Reflexion ausgelesen werden, wenn keine gesonderte Reflexionsschicht vorhanden ist; Voraussetzung ist lediglich das Vorhandensein einer Grenzfläche zwischen zwei Medien mit unterschiedlichen Brechzahlen. Die erläuterte Reflexionsschicht zwischen der Polymerfolie und der Absorberschicht verbessert jedoch die Wiedergabe des holographischen Bildes erheblich.

Unter dem Begriff "großflächig" ist eine Fläche zu verstehen, die deutlich größer ist als die Fläche eines Pits. In diesem Sinne ist z.B. eine Fläche von 1 mm² großflächig. Für das Schema, nach dem Information abgelegt und ausgelesen wird, gibt es viele verschiedene Möglichkeiten. Es ist denkbar, ein Hologramm aus der Polymerfolie auf einmal auszulesen, indem die gesamte Fläche des als Hologramm eingerichteten Bereichs des Sicherheitsklebebandes auf einmal bestrahlt wird. Insbesondere bei größeren Flächen ist es jedoch vorteilhaft, die zu speichernde Information auf eine Anzahl oder Vielzahl von Einzelbereichen aufzuteilen (z.B. mit einer jeweiligen Fläche von 1 mm²) und die Information lediglich aus einem vorgegebenen Einzelbereich auf einmal auszulesen.

Beim Auslesen von Information kommt es durch die lokal variierenden Eigenschaften der Polymerfolie zu Laufzeitunterschieden der von verschiedenen Punkten ausgehenden Lichtwellen, also im Wesentlichen zu einer periodischen Phasenmodulation (was insbesondere bei einer lokalen Einstellung der Brechzahl oder der Grenzflächenstruktur der Polymerfolie gilt). Der von dem Licht erfasste Bereich der Polymerfolie wirkt so wie ein Beugungsgitter, das einfallendes Licht in einer definierten Art und Weise ablenkt. Das abgelenkte Licht formt ein Bild des Speicherobj ekts, das die Rekonstruktion von gespeicherter holographischer Information darstellt. Entsprechendes gilt für das Auslesen von Information aus der Absorberschicht, wenn die Polymerfolie abgetrennt ist.

Grundsätzlich lässt sich mit dem Sicherheitsklebeband holographische Information von unterschiedlichen Arten von Speicherobjekten nutzen. So kann z.B. die in Bildern, wie z.B. Fotografien, Logos, Schriften, usw., enthaltene Information eingeschrieben und ausgelesen werden. Möglich ist auch das Eingeben maschinenlesbarer Daten. Dies erfolgt beispielsweise in Form sogenannter Datenseiten, wobei die in einem Hologramm eines graphischen Bitmusters (das die Dateninformation darstellt) enthaltene holographische Information wie erläutert in die Polymerfolie bzw. Absorberschicht eingegeben wird. Beim Auslesen entsteht ein holographisches Bild dieses graphischen Musters. Die darin enthaltene Information kann z.B. mit Hilfe eines genau justierten CCD-Sensors erfasst und über zugehörige Auswertesoftware verarbeitet werden. Für die Wiedergabe von Bildern, bei denen es nicht auf eine hohe Genauigkeit ankommt, reicht im Prinzip bereits eine einfache Mattscheibe oder z.B. eine Kamera mit einem LCD-Bildschirm. Bei der holographischen Speicherung maschinenlesbarer Daten ist es vorteilhaft, dass die Information nicht sequentiell ausgelesen werden muss, sondern dass ein ganzer Datensatz auf einmal erfasst werden kann, wie erläutert. Sollte trotz des Schutzes der zur Informationsspeicherung dienenden Bereiche des Sicherheitsklebebandes durch die exponierte Außenseite der Polymerfolie dennoch eine Beschädigung auftreten, so führt dies in der Regel nicht zu einem Datenverlust, sondern lediglich zu einer Verschlechterung der Auflösung des beim Auslesen der Informationen rekonstruierten holographischen Bildes. Dies ist in der Regel unproblematisch. Es gibt also zahlreiche Möglichkeiten für die Individualisierung des Sicherheitsklebebandes, die zu einer hohen Fälschungssicherheit führen.

Hintergrundinformation über Reliefhologramme, Phasenhologramme und Amplitudenhologramme, die unter Verwendung einer Polymerfolie gespeichert werden, findet sich in den Offenlegungsschriften zu den internationalen Patentanmeldungen PCT/EP01/05932, PCT/EP01/05933 und PCT/EP01/05931.

Im Folgenden wird die Erfindung anhand von Ausführungsbeispielen weiter erläutert. Die Zeichnungen zeigen in
- Figur 1: einen schematischen, nicht maßstäblichen Längsschnitt durch eine Ausführungsform des erfindungsgemäßen Sicherheitsklebebandes,
- Figur 2: eine schematische Ansicht, die veranschaulicht, wie mit Hilfe eines Schreibstrahls holographische Information in das Sicherheitsklebeband gemäß Figur 1 eingegeben wird,
- Figur 3: eine schematische Ansicht, die veranschaulicht, wie sich bei dem Versuch, das Sicherheitsklebeband gemäß Figur 1 von einer Unterlage abzulösen, ein oberes Teil von einem unteren Teil des Sicherheitsklebebandes trennt,
- Figur 4: eine schematische Ansicht, in der das obere Teil und das untere Teil des Sicherheitsklebebandes gemäß Figur 1 vollständig getrennt sind,
- Figur 5: eine schematische Draufsicht auf einen Bereich des Sicherheitsklebebandes gemäß Figur 1, in den holographische Information eingeschrieben ist, in starker Vergrößerung und
- Figur 6: einen schematischen Längsschnitt durch einen Bereich des Sicherheitsklebebandes gemäß Figur 1, in dem holographische Information eingeschrieben ist, in starker Vergrößerung, wobei das Auslesen von Information veranschaulicht ist (nicht maßstäblich).

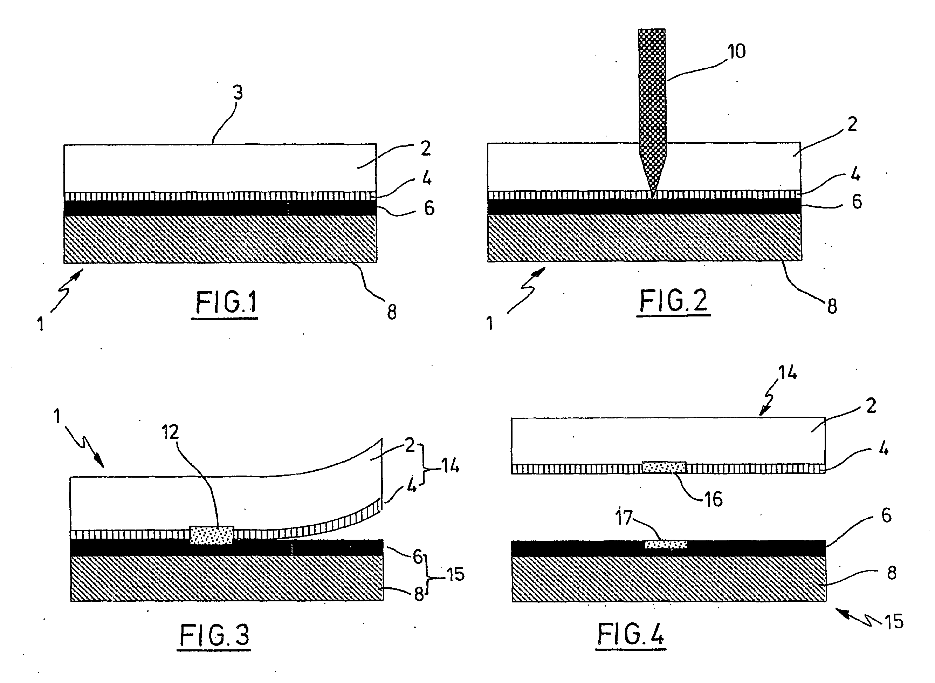

In Figur 1 ist in schematischer Weise ein Ausschnitt aus einem Sicherheitsklebeband 1 gemäß einer Ausführungsform der Erfindung im Längsschnitt dargestellt. Das Sicherheitsklebeband 1 enthält eine Polymerfolie 2, die als Decklage und Tragstruktur des Sicherheitsklebebandes 1 dient und eine Außenseite 3 hat. Unterhalb der Polymerfolie 2 und an die Polymerfolie 2 angrenzend ist eine teildurchlässige Reflexionsschicht 4 angeordnet. Darunter befindet sich eine Absorberschicht 6 mit einem Absorberfarbstoff. Die unterste Lage wird durch eine Klebstoffschicht 8 gebildet, die vorzugsweise im Lieferzustand des Sicherheitsklebebandes 1 durch eine abziehbare Folie oder ein Silikonpapier abgedeckt ist. Die Begriffe "oben" und "unten" beziehen sich hier und im Folgenden auf die Darstellung in den Figuren; das Sicherheitsklebeband kann jedoch auch in jeder anderen Orientierung eingesetzt werden.

Im Ausführungsbeispiel handelt es sich bei der Polymerfolie 2 um eine biaxial verstreckte Polyesterfolie mit einer Stärke von 50 µm. Dünnere oder dickere Folien sind ebenfalls denkbar. Auch kommen Folien aus anderen Materialien in Betracht, wie weiter oben erläutert.

Die Reflexionsschicht 4 besteht im Ausführungsbeispiel aus auf die Unterseite der Polymerfolie 2 aufgedampftem Aluminium mit einer Dicke von etwa 10 nm. Bei einer derartigen Schichtdicke beträgt die Transmission etwa 50 %. Bevorzugte Schichtdicken liegen im Bereich von 1 nm bis 50 nm, aber auch kleinere oder größere Werte sind möglich. Bei einer solch geringen Dicke ist die Reflexionsschicht 4 teildurchlässig, so dass ein auf die Außenseite 3 der Polymerfolie 2 gerichteter Schreibstrahl (z.B. eines Laserlithographen, siehe unten) die Reflexionsschicht 4 durchdringen kann, um die Absorberschicht 6 zu erreichen.

Die Absorberschicht 6 enthält im Ausführungsbeispiel den Absorberfarbstoff Sudanrot 7B, der in eine als Bindemittel dienende Matrix aus Pleximid-Formmasse eingebettet ist. Die Dicke der Absorberschicht beträgt etwa 0,5 µm und liegt vorzugsweise im Bereich von 0,3 µm bis 1,0 µm. Andere Schichtdicken sind jedoch ebenfalls denkbar.

Der Absorberfarbstoff Sudanrot 7B absorbiert besonders gut Licht im Wellenlängenbereich um 532 nm; diese Wellenlänge ist für einen Schreibstrahl eines Laserlithographen zum Eingeben von holographischer Information in das Sicherheitsklebeband 1 geeignet. Beispiele für andere Absorberfarbstoffe sind weiter oben angegeben. So eignen sich grüne Farbstoffe, z.B. aus der Styryl-Familie, besonders für Lichtwellenlängen von 635 nm oder 650 bis 660 nm oder 685 nm, bei denen die Laserdioden derzeitiger DVD-Geräte arbeiten; derartige Laserdioden können direkt moduliert werden, was die Pulserzeugung wesentlich vereinfacht und verbilligt. In Zukunft könnte auch der Bereich von 380 bis 420 nm interessant sein, wenn entsprechende blaue Laserdioden kommerziell und preisgünstig zu haben sind. Hierfür sind dann vorzugsweise gelbe Absorberfarbstoffe einzusetzen, wie z.B. mit schwachen Donoren und Akzeptoren substituierte Stilbene, donorsubstituierte Nitrobenzole oder Coumarinfarbstoffe.

Der Absorberfarbstoff ist im Ausführungsbeispiel in der Absorberschicht 6 in einer derartigen Konzentration enthalten, dass die Absorberschicht 6 eine optische Dichte von etwa 0,3 hat. Bevorzugte optische Dichten liegen im Bereich von 0,2 bis 1,0; andere Werte sind jedoch ebenfalls denkbar. Die optische Dichte ist ein Maß für die Absorption, hier bezogen auf die Lichtwellenlänge eines Schreibstrahls. Definiert ist die optische Dichte als negativer dekadischer Logarithmus der Transmission durch die Absorberschicht, was mit dem Produkt des Extinktionskoeffizienten bei der verwendeten Wellenlänge des Schreibstrahls, der Konzentration des Absorberfarbstoffs in der Absorberschicht 6 und der Dicke der Absorberschicht 6 übereinstimmt.

Die Klebstoffschicht 8 ist im Ausführungsbeispiel aus einer wässrigen Acrylat-Dispersion hergestellt und hat eine Schichtdicke von 23 ± 4 µm. Andere Schichtdicken sind ebenfalls möglich, und es lassen sich auch andere Klebemassen einsetzen. Die Unterseite der Absorberschicht 6 kann vor dem Auftragen der Klebstoffschicht 8 vorbehandelt werden, um ein besseres Anhaften der Klebstoffschicht 8 zu gewährleisten.

Im Ausführungsbeispiel wird die Oberflächenspannung der Reflexionsschicht 4 aus Aluminium durch Flammvorbehandlung so eingestellt, dass die Verankerung oder Haftung zwischen der Reflexionsschicht 4 und der Absorberschicht 6 schwächer ist als die Haftung der Reflexionsschicht 4 an der Polymerfolie 2 sowie als die Verankerung des Verbundes aus Absorberschicht 6 und Klebstoffschicht 8 auf einem Substrat, auf das das Sicherheitsklebeband 1 aufgeklebt ist. Als Substrate kommen vor allem lackierte und unlackierte Pappen in Frage, wie sie für Verpackungen und Kartons üblich sind.

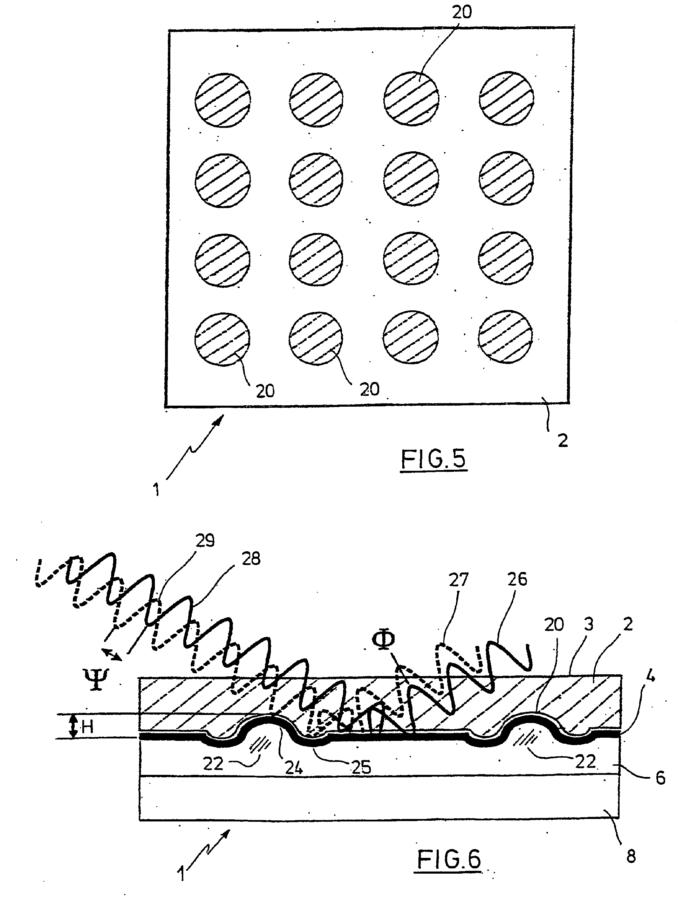

In Figur 2 ist in schematischer Weise veranschaulicht, wie mit Hilfe eines Schreibstrahls 10 einer Schreibeinrichtung holographische Information in das Sicherheitsklebeband 1 eingeschrieben werden kann. Dabei wird die Information in Form einer zweidimensionalen Anordnung von Pits abgelegt. Der Begriff "Pit" ist hier im Sinne eines geänderten Bereichs der Polymerfolie 2 und der Absorberschicht 6 zu verstehen, also allgemeiner als in seiner ursprünglichen Bedeutung ("Loch"). Ein Pit hat eine typische Abmessung in der Größenordnung von 1 µm. Weiter unten wird der Vorgang anhand der Figuren 5 und 6 genauer erläutert.

Im Ausführungsbeispiel wird als Schreibeinrichtung ein Laserlithograph verwendet. Zunächst wird der Schreibstrahl 10 so fokussiert, dass er seinen geringsten Querschnitt in etwa in der Absorberschicht 6 hat. Dabei ist die teildurchlässige Reflexionsschicht 4 eine große Hilfe, denn sie lenkt den Schreibstrahl 10 zurück in die Schreibeinrichtung, wo der Reflex ausgewertet wird. Die Fokussieroptik des Schreibstrahls 10 wird dabei solange verstellt, bis die Lage des Fokus optimiert ist. Im Ausführungsbeispiel befindet sich der Fokus in der dünnen Reflexionsschicht 4, was am einfachsten zu erreichen ist. Während des Fokussiervorgangs kann der Schreibstrahl 10 mit geringer Leistung betrieben werden, um eine übermäßige Erwärmung in der Nähe seines Fokus zu verhindern.

Um in die Polymerfolie 2 Information einzugeben, wird zunächst in einem Hologramm eines Speicherobjektes enthaltene holographische Information als zweidimensionale Anordnung berechnet. Dies kann als Simulation eines klassischen Aufbaus zum Erzeugen eines fotografisch erfassten Hologramms durchgeführt werden, bei dem kohärentes Licht von einem Laser nach Streuung an dem Speicherobjekt mit einem kohärenten Referenzstrahl zur Interferenz gebracht und das dabei entstehende Interferenzmuster als Hologramm aufgenommen wird. Die zweidimensionale Anordnung (zweidimensionaler Array) enthält dann die Information, die zum Ansteuern des Schreibstrahls eines Laserlithographen erforderlich ist. Im Ausführungsbeispiel besitzt der Laserlithograph eine Auflösung von etwa 50 000 dpi (d.h. etwa 0,5 µm). Der Schreibstrahl des Laserlithographen wird im gepulsten Betrieb (typische Pulsdauer von etwa 10 ns bis 10 µs bei einer Strahlleistung von etwa 1 mW bis 20 mW zum Eingeben eines Pits) über die Außenseite 3 der Polymerfolie 2 geführt, um die gewünschte Information sequentiell in die Polymerfolie 2 (oder einen vorgewählten Bereich der Polymerfolie 2) sowie eine angrenzende Zone der Absorberschicht 6 einzugeben. Dabei erwärmt der Schreibstrahl 10 die Absorberschicht 6 entsprechend dem zweidimensionalen Array und erzeugt so die Pits.

Wie weiter unten anhand der Figur 6 näher erläutert, entsteht auf diese Weise ein Hologramm 12, siehe Figur 3. Das Hologramm 12 besteht aus einer Anordnung von Pits, die sowohl in der Polymerfolie 2 als auch in der Absorberschicht 6 ausgebildet sind.

Wenn das Sicherheitsklebeband 1 auf einem Substrat (z.B. eine Verpackung, in den Figuren nicht eingezeichnet) klebt und der Versuch unternommen wird, das Sicherheitsklebeband 1 von dem Substrat abzulösen, trennt sich die Reflexionsschicht 4 von der Absorberschicht 6 ab. Denn zwischen diesen beiden Schichten ist die Haftung geringer als zwischen dem Substrat, der Klebstoffschicht 8 und der Absorberschicht 6 und auch geringer als zwischen der Reflexionsschicht 4 und der Polymerfolie 2. In Figur 3 ist veranschaulicht, wie sich auf diese Weise ein oberes Teil 14 (Polymerfolie 2 mit Reflexionsschicht 4) und ein unteres Teil 15 (Absorberschicht 6 mit Klebstoffschicht 8) des Sicherheitsklebeband 1 ausbilden.

Da im Bereich des Hologramms 12 sowohl die Polymerfolie 2 als auch die Absorberschicht 6 verändert sind und holographische Information tragen, ist nach dem Abziehen des oberen Teils 14 von dem unteren Teil 15 das obere Teil 14 mit einem Hologrammfragment 16 und das untere Teil 15 mit einem Hologrammfragment 17 versehen. Die Figur 4 zeigt diesen Zustand.

Solange das Sicherheitsklebeband 1 noch als Einheit vorliegt, lässt sich das Hologramm 12 problemlos in Reflexion auslesen (siehe auch Figur 6). Nach dem Ablösen des oberen Teils 14 von dem unteren Teil 15 können die Hologrammfragmente 16 und 17 unabhängig voneinander gelesen werden, denn sie enthalten jeweils die vollständige holographische Information. Daher ist es z.B. möglich, aufgrund der in den Hologrammen 12 bzw. 16 und 17 enthaltenen individualisierten Information auch noch aus dem oberen Teil 14 oder dem unteren Teil 15 für sich genommen auf den rechtmäßigen Benutzer des Sicherheitsklebebands 1 zu schließen.

Der Versuch, das obere Teil 14 und das untere Teil 15 des Sicherheitsklebebandes 1 wieder spurlos miteinander zu verbinden, um z.B. das unerlaubte Öffnen einer Verpackung zu vertuschen, misslingt. Denn die beiden Hologrammfragmente 16 und 17 lassen sich nicht wieder deckungsgleich übereinander bringen. Abweichungen werden beim Auslesen der Hologramme sichtbar.

Anhand der Figuren 5 und 6 werden noch einige Details im Bezug auf das Eingeben und Auslesen von holographischer Information im Ausführungsbeispiel erläutert.

Figur 5 ist eine schematische Draufsicht auf einen Ausschnitt aus dem Sicherheitsklebeband 1, die die Anordnung der hier mit 20 bezeichneten Pits zeigt, die von dem Schreibstrahl eines Laserlithographen erzeugt werden. Der Abstand zwischen den Zentren zweier benachbarter Pits 20 beträgt vorzugsweise etwa 1 µm bis 2 µm. Im Ausführungsbeispiel hat ein Pit 20 einen Durchmesser von etwa 0,8 µm. Vorzugsweise beträgt die typische Abmessung eines Pits etwa 0,5 µm bis 2,0 µm. Je kürzer die Wellenlänge des Schreibstrahls ist, um so kleiner können die Pits sein. Andere Formen als runde Pits 20 sind ebenfalls denkbar.

Die Figur 6 veranschaulicht das Profil der Pits 20, die im Ausführungsbeispiel als lokale Grenzflächenstruktur der Polymerfolie 2 und der Absorberschicht 6 ausgebildet sind. Um ein Pit 20 zur Informationsspeicherung zu erzeugen, wird der gepulste Schreibstrahl der Schreibeinrichtung über die Außenseite 3 der Polymerfolie 2 und durch die teildurchlässige Reflexionsschicht 4 hindurch auf eine Zone 22 fokussiert, die in Figur 6 durch Schraffur angedeutet ist. Zu Beginn dieses Vorgangs sind die Unterseite der Polymerfolie 2 (d.h. die Grenzfläche zu der Reflexionsschicht 4) sowie die Reflexionsschicht 4 und die Absorberschicht 6 noch eben. Da die Zone 22 im Bereich der Absorberschicht 6 liegt, wird die Lichtenergie des Schreibstrahls dort effizient in Wärme umgewandelt. Wegen der schlechten Wärmeleitfähigkeit des Materials kommt es in einem eng begrenzten Volumen zu einer signifikanten Temperaturerhöhung, bei der sich die Grenzflächenstruktur der Polymerfolie 2 lokal verändert. Diese Veränderung wird über die Reflexionsschicht 4 auch auf die zu der Polymerfolie 2 weisende Grenzfläche der Absorberschicht 6 übertragen. Auf diese Weise entsteht ein Pit 20, d.h. der lokale Bereich, in dem die Information abgelegt ist. Zu jedem Pit 20 gehört eine zentrale Vertiefung 24 in der Polymerfolie 2, die von einer peripheren, mehr oder weniger ringförmigen Aufwerfung 25 umgeben ist. Der Niveauunterschied zwischen dem tiefsten Punkt der Vertiefung 22 und dem höchsten Punkt der Aufwerfung 25, d.h. die lokale maximale Höhenänderung der Grenzflächenstruktur in dem Pit 20, ist in Figur 6 mit H bezeichnet. H liegt typischerweise im Bereich von 50 nm bis 500 nm, wobei Werte in der Größenordnung von 150 nm für eine zum Auslesen benutzte Lichtwellenlänge von etwa 600 nm besonders günstig sind (Maximum für die Beugungseffizienz). Die Absorberschicht 6 sollte so dick sein, dass sich die reliefartige Grenzflächenstruktur nicht bis in die Klebstoffschicht 8 hineinerstreckt.

In einem Pit 20 kann die Information in binär kodierter Form gespeichert sein, indem H nur zwei verschiedene Werte annimmt (wobei einer der beiden Werte vorzugsweise 0 ist). Es ist auch möglich, in einem Pit 20 Information in kontinuierlich kodierter Form zu speichern, wobei H für ein gegebenes Pit 20 einen beliebig ausgewählten Wert aus einem vorgegebenen Wertebereich annehmen kann. Anschaulich gesprochen, ist bei Speicherung in binär kodierter Form ein Pit "schwarz" oder "weiß", während es bei Speicherung in kontinuierlich kodierter Form auch alle dazwischenliegenden "Grauwerte" annehmen kann.

In Figur 6 ist in schematischer Weise veranschaulicht, wie die in dem Sicherheitsklebeband 1 gespeicherte Information ausgelesen werden kann. Dazu wird kohärentes Licht von einem Laser (vorzugsweise einer Wellenlänge, die von der Absorberschicht 6 nicht oder nur geringfügig absorbiert wird) auf die Außenseite 3 des Sicherheitsklebebands 1 gerichtet. (Alternativ kann auch eine sehr helle LED eingesetzt werden, die unter Umständen sogar zu günstigeren Ergebnissen führt, vor allem im Hinblick auf eine Verminderung von sogenanntem Speckles-Rauschen.) Der Übersichtlichkeit halber ist von diesem vorzugsweise parallel einfallenden kohärenten Licht (einfallender Lesestrahl) in Figur 6 nur ein kleiner Ausschnitt dargestellt, nämlich die mit 26 und 27 bezeichneten einfallenden Lichtwellen. In der Praxis ist das kohärente Licht großflächig auf das Sicherheitsklebeband 1 gerichtet und überdeckt einen Bereich von z.B. 1 mm². Denn zur Rekonstruktion der abgespeicherten Information muss das von vielen Pits 20 ausgehende Licht erfasst werden. Die Intensität des einfallenden Lesestrahls ist zu schwach, um die Grenzflächenstruktur der Polymerfolie 2 bzw. der Absorberschicht 6 und somit die abgespeicherte Information zu verändern.

Die Lichtwellen 22 und 23 haben zueinander eine feste Phase Φ. Sie fallen aus praktischen Gründen unter einem Winkel auf die Außenseite 3 der Polymerfolie 2, durchdringen die Polymerfolie 2 und werden an der Reflexionsschicht 4 teilweise reflektiert, so dass reflektierte Lichtwellen 28 und 29 von der Reflexionsschicht 4 ausgehen und wiederum die Polymerfolie 2 durchdringen. Der Übersichtlichkeit halber ist der durch die teildurchlässige Reflexionsschicht 4 hindurchtretende Anteil der einfallenden Lichtwellen 26 und 27 in Figur 6 nicht dargestellt. Da die lokale Grenzflächenstruktur der Polymerfolie 2 über die Pits 20 variiert, kommt es zu einer Phasenverschiebung, und die reflektierten Lichtwellen 28 und 29 treten mit einer Phase Ψ aus, wie in Figur 6 veranschaulicht. Dies hat zur Folge, dass von dem Hologramm 12 in dem Sicherheitsklebeband 1 nach Art eines Beugungsgitters Lichtwellen in viele Richtungen ausgehen, in denen Phaseninformation enthalten ist. In einigem Abstand von dem Sicherheitsklebeband 1 kann mit einem Detektor ein holographisches Bild erfasst werden, das durch Interferenz dieser Lichtwellen zustande kommt und eine Rekonstruktion der gespeicherten Information darstellt.

Gemäß Figur 6 befindet sich das Sicherheitsklebeband 1 in einem intakten Zustand. Man erkennt, dass die durch die Pits 20 bestimmte reliefartige Grenzflächenstruktur der Polymerfolie 2 bzw. der mit der Polymerfolie 2 fest verbundenen Reflexionsschicht 4 ein "Negativ" der lokalen Grenzflächenstruktur der Absorberschicht 6 ist. Beim Auslesen eines Hologramms spielt es jedoch keine Rolle, ob als holographische Struktur ein "Negativ" oder ein "Positiv" verwendet wird; beide Formen ergeben das gleiche holographische Bild.

Daher enthält das durch die reliefartige Grenzflächenstruktur der Absorberschicht 6 geformte Hologrammfragment 17 die gleiche Information wie das Hologrammfragment 16. Nach dem Ablösen des oberen Teils 14 von dem unteren Teil 15 kann die holographische Information aus dem oberen Teil 14 in Reflexion an der Reflexionsschicht 4 ausgelesen werden, also im Wesentlichen so, wie anhand von Figur 6 erläutert. Zum Auslesen des Hologrammfragments 17 kann eine Reflexion an der dann freiliegenden Oberseite der Absorberschicht 6 ausgenutzt werden.

In dem beschriebenen Ausführungsbeispiel wird holographische Information über die lokale Grenzflächenstruktur der Polymerfolie bzw. der Absorberschicht eingeschrieben. Bei einer anderen Möglichkeit wird die Brechzahl der Polymerfolie lokal durch Erwärmung verändert, was sich auf die Phasenlage von Licht auswirkt, das die Polymerfolie durchdringt. Auch in diesem Fall kann ein Laserlithograph zum Einschreiben der Information benutzt werden, ähnlich wie in der bereits erläuterten Weise. Mischformen beider Methoden sind besonders vorteilhaft, da sie einen hohen Kontrast liefern.

Wenn der Absorberschicht für den Fall, dass in der Polymerfolie ausschließlich die Brechzahl variiert wird, keine reliefartige Grenzflächenstruktur aufgeprägt wird, kann ein Absorberfarbstoff benutzt werden, der bei Absorption des Schreibstrahls sein Absorptionsvermögen verändert. Auf diese Weise entstehen beim Einschreiben der holographischen Information in der Polymerfolie ein refraktives Phasenhologramm und in der Absorberschicht ein Absorptionshologramm. Zum Auslesen werden sowohl die Polymerfolie als auch die Absorberschicht durchstrahlt, weshalb eine zusätzlichere Reflexionsschicht zwischen der Absorberschicht und der Klebstoffschicht nützlich ist.

Aber auch wenn an der Grenzfläche der Absorberschicht eine Reliefstruktur ausgebildet wird, hat ein Absorberfarbstoff, der bei Absorption des Schreibstrahls sein Absorptionsvermögen lokal verändert, aufgrund einer kontrastverstärkenden Wirkung Anwendungsvorteile.

Grundsätzlich braucht in dem Sicherheitsklebeband keine zusätzliche Reflexionsschicht vorhanden zu sein, denn an Grenzflächen zwischen Substanzen mit unterschiedlicher Brechzahl wird Licht ohnehin reflektiert. Reflexionsschichten wie die teildurchlässige Reflexionsschicht 4 erleichtern jedoch die Handhabung des Sicherheitsklebebands 1 erheblich.

## Patentansprüche

1. Sicherheitsklebeband, mit
- einer Polymerfolie (2), deren Brechzahl und/oder Grenzflächenstruktur lokal durch Erwärmung veränderbar ist,
- einer unterhalb der Polymerfolie (2) angeordneten Absorberschicht (6) mit einem Absorberfarbstoff, die dazu eingerichtet ist, einen auf die Absorberschicht (6) gerichteten Schreibstrahl (10) zumindest teilweise zu absorbieren, die dabei erzeugte Wärme zumindest teilweise lokal an die Polymerfolie (2) abzugeben und sich dabei selbst lokal zu verändern, und
- einer unterhalb der Absorberschicht (6) angeordneten Klebstoffschicht (8),
- wobei die Haftung zwischen der Klebstoffschicht (8) und der Absorberschicht (6) größer ist als die Haftung zu der Polymerfolie (2).

2. Sicherheitsklebeband nach Anspruch 1, **dadurch gekennzeichnet, dass** die Grenzflächenstruktur der Polymerfolie (2) lokal durch Erwärmung veränderbar ist, wobei holographische Information über die lokale Grenzflächenstruktur der Polymerfolie (2) einschreibbar ist.

3. Sicherheitsklebeband nach Anspruch 2, **dadurch gekennzeichnet, dass** die Absorberschicht (6) dazu eingerichtet ist, bei Absorption eines Schreibstrahls (10) eine der lokalen Grenzflächenstruktur der Polymerfolie (2) entsprechende Grenzflächenstruktur anzunehmen.

4. Sicherheitsklebeband nach einem der Ansprüche 1 bis 3, **dadurch gekennzeichnet, dass** die Brechzahl der Polymerfolie (2) lokal durch Erwärmung veränderbar ist, wobei holographische Phaseninformation über die lokale optische Weglänge in der Polymerfolie (2) einschreibbar ist.

5. Sicherheitsklebeband nach einem der Ansprüche 1 bis 4, **dadurch gekennzeichnet, dass** der Absorberfarbstoff dazu eingerichtet ist, bei Absorption eines Schreibstrahls (10) in seinen optischen Eigenschaften, vorzugsweise seinem Absorptionsvermögen, lokal verändert zu werden.

6. Sicherheitsklebeband nach einem der Ansprüche 1 bis 5, **dadurch gekennzeichnet, dass** zwischen der Polymerfolie (2) und der Absorberschicht (6) eine teildurchlässige Reflexionsschicht (4) angeordnet ist, wobei vorzugsweise die Haftung zwischen der Polymerfolie (2) und der Reflexionsschicht (4) größer ist als die Haftung zwischen der Reflexionsschicht (4) und der Absorberschicht (6).

7. Sicherheitsklebeband nach Anspruch 6, **dadurch gekennzeichnet, dass** die Reflexionsschicht (4) eine Dicke im Bereich von 1 nm bis 50 nm hat.

8. Sicherheitsklebeband nach Anspruch 6 oder 7, **dadurch gekennzeichnet, dass** die Reflexionsschicht (4) Aluminium aufweist.

9. Sicherheitsklebeband nach einem der Ansprüche 1 bis 8, **dadurch gekennzeichnet, dass** die Polymerfolie (2) verstreckt ist, vorzugsweise biaxial verstreckt.

10. Sicherheitsklebeband nach einem der Ansprüche 1 bis 9, **dadurch gekennzeichnet, dass** die Polymerfolie (2) ein Material aufweist, das aus der folgenden Gruppe ausgewählt ist: Polypropylen, Polyvinylchlorid, Polyester, Polyethylenterephthalat, Polyethylennaphthalat, Polymethylpenten, Polyimid.

11. Sicherheitsklebeband nach einem der Ansprüche 1 bis 10, **dadurch gekennzeichnet, dass** die Absorberschicht (6) ein Bindemittel aufweist und vorzugsweise eine Dicke im Bereich von 0,1 µm bis 10 µm hat.

12. Sicherheitsklebeband nach einem der Ansprüche 1 bis 11, **dadurch gekennzeichnet, dass** die Polymerfolie (2) als Decklage und als Tragstruktur des Sicherheitsklebebandes (1) eingerichtet ist.

13. Sicherheitsklebeband nach einem der Ansprüche 1 bis 12, **gekennzeichnet durch** eingeschriebene holographische Information.

14. Verfahren zum Eingeben von holographischer Information in ein Sicherheitsklebeband (1) nach einem der Ansprüche 1 bis 13, wobei in einem Hologramm eines Speicherobjekts enthaltene holographische Information als zweidimensionale Anordnung berechnet wird und ein Schreibstrahl (10) einer Schreibeinrichtung, vorzugsweise eines Laserlithographen, auf die Absorberschicht (6) gerichtet und entsprechend der zweidimensionalen Anordnung so angesteuert wird, dass die lokale Brechzahl und/oder Grenzflächenstruktur der Polymerfolie (2) gemäß der holographischen Information eingestellt wird und die Absorberschicht (6) gemäß der holographischen Information lokal verändert wird.

15. Verfahren nach Anspruch 14, wobei das Sicherheitsklebeband eine teildurchlässige Reflexionsschicht (4) gemäß Anspruch 6 hat, **dadurch gekennzeichnet, dass** zum Fokussieren des Schreibstrahls (10) dessen von der Reflexionsschicht (4) zurückgeworfener Reflex ausgewertet wird.

16. Verfahren nach Anspruch 14 oder 15, **dadurch gekennzeichnet, dass** die holographische Information in Form von Pits (20) vorgegebener Größe eingegeben wird.

17. Verfahren nach Anspruch 16, **dadurch gekennzeichnet, dass** in einem Pit (20) die holographische Information in binär kodierter Form gespeichert wird.

18. Verfahren nach Anspruch 16, **dadurch gekennzeichnet, dass** in einem Pit (20) die holographische Information in kontinuierlich kodierter Form gespeichert wird, wobei die lokalen Eigenschaften der Polymerfolie (2) in dem Pit (20) gemäß einem Wert aus einem vorgegebenen Wertebereich eingestellt werden.

## Claims

1. An adhesive security tape comprising
- a polymer film (2) whose refractive index and/or interface structure can be changed locally by heating,
- an absorber layer (6) disposed below the polymer film (2) and comprising an absorber dye which is set up at least partly to absorb a write beam (10) directed onto the absorber layer (6), to transfer at least some of the heat generated to the polymer film (2) locally, and in doing so to undergo local change itself, and
- an adhesive layer (8) disposed below the absorber layer (6),
- the adhesion between the adhesive layer (8) and the absorber layer (6) being greater than the adhesion to the polymer film (2).

2. The adhesive security tape of claim 1, **characterized in that** the interface structure of the polymer film (2) can be changed locally by heating, holographic information being writable via the local interface structure of the polymer film (2).

3. The adhesive security tape of claim 2, **characterized in that** the absorber layer (6) is set up to adopt an interface structure which corresponds to the local interface structure of the polymer film (2), when a write beam (10) is absorbed.

4. The adhesive security tape of any of claims 1 to 3, **characterized in that** the refractive index of the polymer film (2) can be changed locally by heating, holographic phase information being writable via the local optical path length in the polymer film (2).

5. The adhesive security tape of any of claims 1 to 4, **characterized in that** the absorber dye is set up to undergo local change in its optical properties, preferably its absorption capacity, when a write beam (10) is absorbed.

6. The adhesive security tape of any of claims 1 to 5, **characterized in that** disposed between the polymer film (2) and the absorber layer (6) there is a partly transparent reflection layer (4), the adhesion between the polymer film (2) and the reflection layer (4) preferably being greater than the adhesion between the reflection layer (4) and the absorber layer (6).

7. The adhesive security tape of claim 6, **characterized in that** the reflection layer (4) has a thickness in the range from 1 nm to 50 nm.

8. The adhesive security tape of claim 6 or 7, **characterized in that** the reflection layer (4) comprises aluminum.

9. The adhesive security tape of any of claims 1 to 8, **characterized in that** the polymer film (2) is oriented, preferably biaxially oriented.

10. The adhesive security tape of any of claims 1 to 9, **characterized in that** the polymer film (2) comprises a material selected from the following group: polypropylene, polyvinyl chloride, polyester, polyethylene terephthalate, polyethylene naphthalate, polymethylpentene, polyimide.

11. The adhesive security tape of any of claims 1 to 10, **characterized in that** the absorber layer (6) comprises a binder and preferably has a thickness in the range from 0.1 µm to 10 µm.

12. The adhesive security tape of any of claims 1 to 11, **characterized in that** the polymer film (2) is set up as outer layer and as bearing structure of the adhesive security tape (1).

13. The adhesive security tape of any of claims 1 to 12, **characterized by** written holographic information.

14. A process for entering holographic information into an adhesive security tape (1) as claimed in any of claims 1 to 13, where holographic information present in a hologram of a storage object is calculated as a two-dimensional array and a write beam (10) of a write device, preferably a laser lithography device, is directed onto the absorber layer (6) and is controlled in accordance with the two-dimensional array in such a way that the local refractive index and/or interface structure of the polymer film (2) is adjusted in accordance with the holographic information and the absorber layer (6) is locally changed in accordance with the holographic information.

15. The process of claim 14, the adhesive security tape having a partly transparent reflection layer (4) as set forth in claim 6, **characterized in that** the write beam (10) is focused by evaluating its reflection returned from the reflection layer (4).

16. The process of claim 14 or 15, **characterized in that** the holographic information is entered in the form of pits (20) of predetermined size.

17. The process of claim 16, **characterized in that** the holographic information is stored in binary-encoded form in a pit (20).

18. The process of claim 16, **characterized in that** the holographic information is stored in continuously encoded form in a pit (20), the local properties of the polymer film (2) being adjusted in the pit (20) in accordance with a value from a predetermined range of values.

## Revendications

1. Ruban adhésif de sécurité comprenant :
- un film polymère (2), dont l'indice de réfraction et/ou la structure interfaciale peut être changé(e) localement par chauffage,
- une couche absorbante (6) disposée sous le film polymère (2) comprenant un colorant absorbant, qui est prévue pour absorber, au moins en partie, un faisceau d'écriture (10) dirigé sur la couche absorbante (6), pour transférer localement au film polymère (2), au moins en partie, la chaleur générée, et en même temps se modifier localement, et
- une couche adhésive (8) disposée sous la couche absorbante (6),
- dans lequel l'adhérence entre la couche absorbante (6) et la couche adhésive (8) est plus forte que l'adhérence avec le film polymère (2).

2. Ruban adhésif de sécurité selon la revendication 1, **caractérisé en ce que** la structure interfaciale du film polymère (2) peut être localement modifiée par chauffage, l'information holographique pouvant être écrite sur la structure interfaciale locale du film polymère (2).

3. Ruban adhésif de sécurité selon la revendication 2, **caractérisé en ce que** la couche absorbante (6) est prévue pour adopter, par absorption d'un faisceau d'écriture (10), une structure interfaciale qui correspond à la structure interfaciale locale du film polymère (2).

4. Ruban adhésif de sécurité selon l'une quelconque des revendications 1 à 3, **caractérisé en ce que** l'indice de réfraction du film polymère (2) peut être modifié localement par chauffage, l'information de phase holographique sur les chemins optiques locaux pouvant être écrite dans le film polymère (2).

5. Ruban adhésif de sécurité selon l'une quelconque des revendications 1 à 4, **caractérisé en ce que** le colorant absorbant est prévu pour que ses propriétés optiques, de préférence son comportement d'absorption, soient changées localement, par absorption d'un faisceau d'écriture (10).

6. Ruban adhésif de sécurité selon l'une quelconque des revendications 1 à 5, **caractérisé en ce qu'**une couche de réflexion semi-transparente (4) est disposée entre le film polymère (2) et la couche absorbante (6), dans lequel, de préférence, l'adhérence entre le film polymère (2) et la couche de réflexion (4) est plus élevée qu'entre la couche de réflexion (4) et la couche absorbante (6).

7. Ruban adhésif de sécurité selon la revendication 6, **caractérisé en ce que** la couche de réflexion (4) a une épaisseur dans l'intervalle de 1 nm à 5 0 nm.

8. Ruban adhésif de sécurité selon la revendication 6 ou la revendication 7, **caractérisé en ce que** la couche de réflexion (4) comprend de l'aluminium.

9. Ruban adhésif de sécurité selon l'une quelconque des revendications 1 à 8, **caractérisé en ce que** le film polymère (2) est étiré, de préférence étiré biaxialement.

10. Ruban adhésif de sécurité selon l'une quelconque des revendications 1 à 9, **caractérisé en ce que** le film polymère (2) comprend un matériau choisi dans le groupe comprenant le polypropylène, le chlorure de polyvinyle, le polyester, le polyéthylène téréphtalate, le polyéthylène naphtalate, le polyméthylpentène, et le polyimide.

11. Ruban adhésif de sécurité selon l'une quelconque des revendications 1 à 10, **caractérisé en ce que** la couche absorbante (6) comprend un agent liant et de préférence a une épaisseur dans l'intervalle de 0,1 µm à 10 µm.

12. Ruban adhésif de sécurité selon l'une quelconque des revendications 1 à 11, **caractérisé en ce que** le film polymère (2) est prévu comme couche extérieure et comme structure support du ruban adhésif de sécurité (1).

13. Ruban adhésif de sécurité selon l'une quelconque des revendications 1 à 12, **caractérisé par** une information holographique écrite.

14. Procédé pour introduire de l'information holographique dans un ruban adhésif de sécurité (1) selon l'une quelconque des revendications 1 à 13, dans lequel l'information holographique contenue dans un hologramme d'un objet de stockage est calculée comme un arrangement bidimensionnel et un faisceau d'écriture (10) d'un dispositif d'écriture, de préférence, un appareil de lithographie laser, est dirigé sur la couche absorbante (6) et est contrôlé en fonction de l'arrangement bidimensionnel de telle sorte que l'indice de réfraction local et/ou la structure interfaciale locale du film polymère (2) soit ajustée selon l'information holographique et la couche absorbante (6) soit modifiée localement selon l'information holographique.

15. Procédé selon la revendication 14, dans lequel le ruban adhésif de sécurité possède une couche de réflexion (4) semi-transparente selon la revendication 6, **caractérisé en ce que**, pour faire converger le faisceau d'écriture (10), on exploite la valeur de son reflet provenant en retour de la couche de réflexion (4).

16. Procédé selon la revendication 14 ou la revendication 15, **caractérisé en ce que** l'information holographique est entrée sous la forme de creux (20) de tailles prédéterminées.

17. Procédé selon la revendication 16, **caractérisé en ce que**, dans un creux (20), l'information holographique est stockée sous une forme codée binaire.

18. Procédé selon la revendication 16, **caractérisé en ce que**, dans un creux (20), l'information holographique est stockée sous une forme codée continue, les propriétés locales du film polymère (2) étant ajustées dans le creux (20) selon une valeur dans un intervalle prédéterminé de valeurs.
